# EUROPÄISCHE PATENTSCHRIFT

(11) **EP 3 510 732 B1**
(45) Veröffentlichungstag und Bekanntmachung des Hinweises auf die Patenterteilung: **20.10.2021**
(21) Anmeldenummer: 17784541.9
(22) Anmeldetag: 31.08.2017
(51) Int. Cl.: H04L 12/40, H04L 12/46

(54) **BUSSYSTEM SOWIE KOMMUNIKATIONSVERFAHREN**
BUS SYSTEM AND COMMUNICATION METHOD
SYSTÈME DE BUS AINSI QUE PROCÉDÉ DE COMMUNICATION

(30) Priorität: 06.09.2016 DE 102016116599
(43) Veröffentlichungstag der Anmeldung: 17.07.2019
(73) Patentinhaber: Fachhochschule Aachen, 52066 Aachen (DE)
(72) Erfinder: HÜNING, Felix, 52066 Aachen (DE); WACHE, Franz-Josef, 52062 Aachen (DE); HEUERMANN, Holger, 52076 Aachen (DE)
(74) Vertreter: Ostermann, Thomas
(86) Internationale Anmeldenummer: PCT/DE2017/100729
(87) Internationale Veröffentlichungsnummer: WO 2018/046055

(56) Entgegenhaltungen:
- EP-B1- 1 964 286
- WO-A1-2016/115563
- KONGEZOS V K ET AL: "Wireless communication between AGVs (autonomous guided vehicles) and the industrial network CAN (controller area network)", PROCEEDINGS / 2002 IEEE INTERNATIONAL CONFERENCE ON ROBOTICS AND AUTOMATION : MAY 11 - 15, 2002, WASHINGTON, D.C, IEEE SERVICE CENTER, PISCATAWAY, NJ, Bd. 1, 11. Mai 2002 (2002-05-11), Seite 434, XP032882425, DOI: 10.1109/ROBOT.2002.1013398 ISBN: 978-0-7803-7272-6

## Beschreibung

Die Erfindung betrifft ein Bussystem enthaltend Busleitungen nach dem Oberbegriff des Patentanspruchs 1.

Die Erfindung betrifft ferner ein Verfahren zur Übertragung von Daten in einem Bussystem nach dem Oberbegriff des Patentanspruchs 5.

Aus der DE 101 34 584 A1 ist ein Bussystem mit mindestens zwei Busleitungen bekannt, an dem eine Mehrzahl von Busteilnehmern jeweils über einen Transceiver angeschlossen sind. Der Transceiver wandelt ein an der Busleitung anliegendes differenzielles Signal in ein digitales Signal um. Der Busteilnehmer ist als ein Mikrocontroller ausgebildet, der über einen Bus-Controller verfügt. Handelt es sich bei dem Bussystem um einen CAN-Bus, ist der Mikrocontroller über ein CAN-Controller mit dem Transceiver verbunden. Das bekannte Bussystem beschreibt eine kabelgebundene Verbindung der Busteilnehmer zu den Busleitungen. Wünschenswert ist, dass die Busteilnehmer kabellos zu einem Busknoten bzw. mit Busleitungen verbunden sind. Hierdurch wäre eine Gewichtsreduzierung aufgrund des Wegfalls von Kabeln und Steckverbindungen verbunden. Ferner würde eine galvanische Trennung eine mechanische Entkopplung der Busteilnehmer gewährleistet.

Aus der EP 1 840 684 A1 ist ein Bussystem bekannt, bei dem Busteilnehmer kabelgebunden an Busleitungen angeschlossen sind. Die Busteilnehmer weisen jeweils Schnittstellenmodule auf, die zum Datenaustausch kabellos bzw. drahtlos mit I/O-Modulen verbunden sind. Hierzu sind entsprechende Funkmodule erforderlich. Die Funkmodule können als USB-Bluetooth-Module, RS-232-Bluetooth-Module, B-WLAN-Module oder dergleichen ausgebildet sein. Es handelt sich dabei um protokollbasierte Funkstandards, die nur eine Funkverbindung zwischen zwei unterschiedlichen Bussen, beispielsweise CAN-Bussen, ermöglichen. Wünschenswert ist es jedoch, dass die Busteilnehmer kabellos und ohne zusätzliche Protokolle in ein Bussystem integriert werden können. Insbesondere sollen die anderen Busteilnehmer nicht erkennen können, ob die Kommunikation über Kabel oder drahtlos erfolgt. Eine 1:1-Ersetzung der Kabelverbindung durch eine drahtlose Kommunikationsverbindung wäre wünschenswert.

Aus der EP 1 964 286 B1 ist eine Funkübertragungsstrecke bekannt, die Antennen vorsieht, so dass unter Nutzung von mindestens zwei Freiraummodem Datensignale übertragen werden können. Hierdurch kann eine volle Übertragungskapazität des Funkkanals genutzt werden. Der Einsatz in Bussystemen ist nicht vorgesehen.

Aus der Druckschrift KONGEZOS V K ET AL: "Wireless communication between AGVs (autonomous guided vehicles) and the industrial network CAN (controller area network)" ist ein Bussystem mit Busleitungen bekannt, an denen eine Anzahl von Busteilnehmern über einen Transceiver anschließbar sind. An den Transceiver schließt sich ein Mikrokontroller an, der zur Protokollumsetzung eines CAN-Signals in ein Funksignal dient. Nachteilig an dem bekannten Bussystem ist, dass es aufgrund der Protokollumsetzung nicht echtzeitfähig ist.

Aufgabe der vorliegenden Erfindung ist es, ein System mit einem Bussystem sowie ein Verfahren zur Übertragung von Daten in einem Bussystem derart anzugeben, dass auf einfache und betriebssichere Weise eine drahtlose Kommunikation von Busteilnehmern ermöglicht wird.

Zur Lösung dieser Aufgabe weist die Erfindung die Merkmale des Patentanspruchs 1 auf.

Die Erfindung sieht eine Zwischenbrückeneinheit vor, die zwischen einem Busteilnehmer und einem Busknoten des Bussystems angeordnet ist, wobei die Zwischenbrückeneinheit zumindest zwei Sender-/Empfänger-Paare aufweist zur bidirektionalen Kommunikation. Sender dieser Sender-/Empfänger-Paare weisen einen Senderoszillator, einen Amplituden- und/oder Phasenund/oder Frequenzmodulator sowie eine Dual-Mode-Antenne auf. Empfänger weisen einen Demodulator und eine Antenne auf. Das eine Sende-/Empfangs-Paar ist mit dem Transceiverkabel verbunden. Das andere Sende-/Empfangs-Paar ist mit dem Busteilnehmerkabel oder mit einem Repeater verbunden. Nach der Erfindung erfolgt eine kabellose Übertragung von digitalen Signalen. Die Zwischenbrückeneinheit weist keine Software bzw. Protokolle auf. Auch weist die Zwischenbrückeneinheit keine A/D- bzw. D/A-Wandler auf. Die Modulation bzw. Demodulation erfolgt ausschließlich auf Basis von Schaltungskomponenten, wobei digitale Informationen übertragen werden und bevorzugt ein Frequenzmultiplexbetrieb erfolgt.

Nach der Erfindung weist die Zwischenbrückeneinheit ein erstes Baumodul mit einem ersten Sende-/Empfänger-Paar auf, das mit dem Transceiver kabelverbunden ist. Ferner weist die Zwischenbrückeneinheit ein zweites Baumodul auf, das über eine zweite Sender-/Empfänger-Paar mit dem Busteilnehmer oder mit einem weiteren an einem zweiten Busknoten kabelverbunden angeordneten Repeater bzw. Transceiver verbunden ist. Vorteilhaft kann hierdurch ein Busteilnehmer kabellos an ein Bussystem angeschlossen werden bzw. kann die Zwischenbrückeneinheit auch als ein Gateway zu einem anderen Bussystem genutzt werden.

Nach der Erfindung weist der Busteilnehmer einen Datenbus-Controller, vorzugsweise einen CAN-Controller, als Hardwareschnittstelle auf. Vorteilhaft wird auf eine Schaltung verzichtet, die differenziellen Signale des CAN-Busses in unsymmetrische Dualmode-Signale umwandelt. Stattdessen wird der Transceiver als Anbindung zu dem Busknoten genutzt, so dass auf einer busabgewandten Seite des Transceivers standardisierte digitale Signale Rₓ (Empfangsdaten) und Tₓ (Sendedaten) genutzt werden können. Das Sende-/Empfänger-Paar bzw. das erste Baumodul sowie das zweite Baumodul der Zwischenbrückeneinheit schließen sich somit direkt an einen Transceiver an.

Nach der Erfindung ist die Zwischenbrückeneinheit derart ausgebildet, dass eine Funkübertragungsstrecke unter Nutzung von zwei Freiraummoden gebildet ist. Vorteilhaft kann hierdurch die volle Übertragungskapazität des Funckanals genutzt werden.

Nach einer Weiterbildung der Erfindung erfolgt die Funkübertragung in einem beliebigen Frequenzbereich, bevorzugt im UWB-Band bis 10 GHz. Vorteilhaft ist, durch die Verwendung des Dual-Mode Funks, eine erhöhte Abhörsicherheit gegeben.

Zur Lösung der Aufgabe weist das erfindungsgemäße Verfahren die Merkmale des Patentanspruchs 5 auf.

Der besondere Vorteil des erfindungsgemäßen Verfahrens besteht darin, dass eine Funkübertragung in Echtzeit realisiert werden kann. Es erfolgt somit eine 1:1-Ersetzung der kabelverbundenen Kommunikation zwischen Busteilnehmern und Busknoten.

Ausführungsbeispiele der Erfindung werden nachfolgend anhand der Zeichnungen näher erläutert.

Es zeigen:
- Fig. 1: ein Blockschaltbild einer ersten Ausführungsform des erfindungsgemäßen Systems und
- Fig. 2: ein Blockschaltbild einer zweiten Ausführungsform des erfindungsgemäßen Systems.

Ein erfindungsgemäßes System umfasst insbesondere ein Bussystem, das beispielsweise als ein CAN-Bussystem, LIN-Bussystem, Flexray-Bussystem, SPI-Bussystem oder dergleichen ausgebildet sein kann. In den vorliegenden Ausführungsbeispielen wird sich auf ein CAN-Bussystem beschränkt.

Das CAN-Bussystem kann im Automobil- oder im Industriebereich eingesetzt werden. Es ermöglicht die Kommunikation vorzugsweise zwischen Steuergeräten bzw. I/O-Geräten.

Nach einer ersten Ausführungsform der Erfindung weist ein CAN-Bussystem 1 zwei Busleitungen 2, 2' auf. An einem Busknoten 3 ist ein Transceiver 4 kabelgebunden angeschlossen, wobei auf eine dem Bus zugewandten Seite des Transceivers 4 eine erste Verbindungsleitung des Transceivers 4 an der ersten Busleitung 2 und eine zweite Kabelverbindung des Transceivers 4 an der zweiten Busleitung 2' angeschlossen ist.

Auf einer dem Bus abgewandten Seite des Transceivers 4 schließt sich eine Zwischenbrückeneinheit 5 an, die ein erstes Baumodul 6 und ein zweites Baumodul 7 umfasst. Das erste Baumodul 6 weist ein erstes Sende-/Empfänger-Paar 8 und das zweite Baumodul 7 weist ein zweites Sende-/Empfänger-Paar 9 auf. Das erste Baumodul 6 und das zweite Baumodul 7 sind über eine Funkverbindung drahtlos miteinander gekoppelt.

Das erste Baumodul 6 ist über eine Kabelverbindung mit dem Transceiver 4 verbunden. Der Transceiver 4 digitalisiert die differenziellen Signale, die auf den Busleitungen 2, 2' anliegen in die digitale Signale und überträgt diese als Sendedaten Tₓ an einen Sender 10 des ersten Sende-/Empfänger-Paares 8. Zur bidirektionalen Kommunikation ist der Transceiver 4 in der Lage, Empfangsdaten Rₓ von einem Empfänger 11 des ersten Sende-/Empfänger-Paares 8 zu erhalten.

Der Sender 10 weist einen Sendeoszillator, einen Amplituden- und/oder Phasen- und/oder Frequenzmodulator sowie eine als Dual-Mode-Antenne ausgebildete Antenne auf. Die Dual-Mode-Antenne ist eine Antenne für zwei Freiraummoden.

Der Empfänger 11 weist einen Demodulator enthaltend einen Mischer sowie eine als Dual-Mode-Antenne ausgebildete Antenne auf. Die Dual-Mode-Antenne ist eine Antenne für zwei Freiraummoden.

Das zweite Sende-/Empfänger-Paar 9 weist den gleichen Aufbau auf wie das erste Sende-/Empfänger-Paar 8. Es ist über Leitungen mit einem Busteilnehmer 12 verbunden, der einen Mikrocontroller sowie ein CAN-Modul 14 aufweist. Es sind somit bidirektional Sendedaten Tₓ und Empfangsdaten Rₓ zwischen dem Busteilnehmer 12 und dem zweiten Sender-/Empfänger-Paar 9 austauschbar. Das CAN-Modul 14 dient als Hardwareschnittstelle des Busteilnehmers 12 zu dem zweiten Baumodul 7.

Die Sender 10 und die Empfänger 11 des ersten Sende-/Empfänger-Paares 8 und des zweiten Sende-/Empfänger-Paares 9 sind gleich ausgebildet. Eine Funkübertragungsstrecke zwischen einem Sender 10 des ersten Sende-/Empfänger-Paares 8 und einem Empfänger 11 des zweiten Sende-/Empfänger-Paares 9 einerseits und dem Sender 10 des zweiten Sende-/Empfänger-Paares 9 und dem Empfänger 11 des ersten Sende-/Empfänger-Paares 8 andererseits erfolgt über mindestens zwei Freiraummoden, der als Dual-Mode-Funk bezeichnet wird. Der Dual-Mode-Funk ist bei allen bekannten Grundmodulationsverfahren, wie Amplitudenmodulation, Phasenmodulation und Frequenzmodulation einsetzbar. Bei Anwendung der Amplitudenmodulation weist der Sender 10 einen monofrequenten Hochfrequenzoszillator auf, der ein Signal mit einer Referenzfrequenz sendet. Anschließend wird dieses Signal beispielsweise durch eine digitale Ein- und Ausschaltung in der Amplitude moduliert. Dieses wird beispielsweise durch einen PIN-Diodenschalter realisiert. Das amplitudenmodulierte Signal wird mittels eines Signalleiters in zwei Pfade aufgeteilt. Über eine horizontal polarisierte Antenne und eine vertikale polarisierte Antenne werden die beiden amplitudenmodulierten Signale abgestrahlt. Eine horizontal polarisierte Antenne und eine vertikal polarisierte Antenne des Empfängers 11 empfangen beide Signale und führen diese einem Multiplizierer des Mischers zu. Der Mulitplizierer kann beispielsweise als eine Gilbertzelle ausgebildet sein. Ausgangssignale des Multiplizierers liegen im Bereich der doppelten Frequenz und im ZF-Frequenzbereich. Letzterer wird nur durch die Modulationsbandbreite bestimmt. Ein einfaches Tiefpassfilter lässt nur den unteren Frequenzbereich passieren.

Weitere Modulationsverfahren, wie beispielsweise Phasen-Differenzmodulation (PDM), Amplituden-Phasen-Differenzmodulation (APDM) und Frequenz-Differenzmodulation (FDM), Amplituden-Phasen-Frequenz-Differenzmodulation (APFDM) sowie 4-Moden-Differenzmodulation (X4DM) sind in der EP 1 964 286 B1 beschrieben und gelten als durch diese Anmeldung mit offenbart.

Die Funkübertragung zwischen dem ersten Baumodul 6 und dem zweiten Baumodul 7 erfolgt in einem Frequenzbereich von 4,2 GHz bis 4,8 GHz.

Da im Vergleich zur einer kabelgebundenen Anbindung des Busteilnehmers lediglich zwei Sende-/Empfänger-Paare 8, 9 zwischen dem Transceiver 4 und dem Busteilnehmer 12 zwischengeschaltet werden, kann eine kabellose Verbindung des Busteilnehmers 12 an die Busleitung 2, 2' einfach und kostengünstig hergestellt werden.

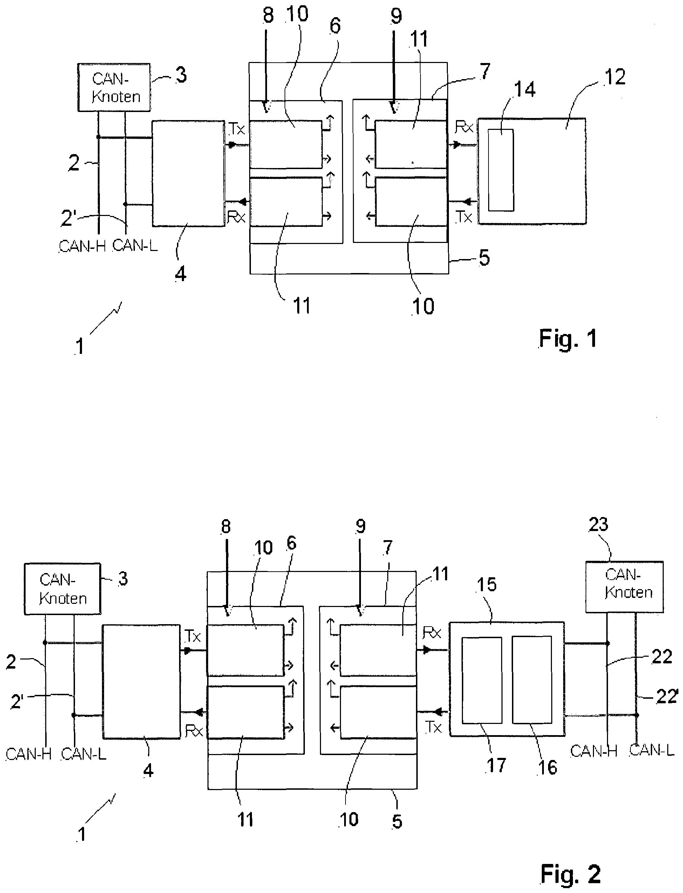

Nach einer zweiten Ausführungsform der Erfindung gemäß Figur 2 dient die Zwischenbrückeneinheit 5 zur Erzeugung einer Gateway-Funktion.

Gleiche Bauteile bzw. Bauteilfunktionen der Ausführungsbeispiele sind mit den gleichen Bezugsziffern versehen.

Im Unterschied zu der ersten Ausführungsform ist an das zweite Sende-/Empfänger-Paar 9 ein Gateway-Modul 15 enthaltend ein Transceiver 16 und ein Repeater 17 über die Kabelverbindung angeschlossen. Der Transceiver 15 dient zur Anbindung an einen zweiten Busknoten 23 eines anderen Bussystems mit Leitung 22, 22'. Hierdurch kann ein CAN-Funk-Gateway zwischen zwei CAN-Busleitungen 2, 2' und 22, 22' eingerichtet werden.

Alternativ können auch die zwei Busknoten 3, 23 in einer galvanisch getrennten Punkt-Zu-Punkt-Verbindung miteinander verbunden werden.

## Patentansprüche

1. Bussystem enthaltend Busleitungen (2, 2'), an denen eine Anzahl von Busteilnehmern (12) oder Gateway-Module (15) über einen Transceiver (4) anschließbar sind, wobei der Transceiver (4) an einem Busknoten (3) kabelgebunden angeschlossen ist, wobei auf einer dem Bus zugewandten Seite des Transceivers (4) eine erste Verbindungsleitung des Transceivers (4) an der ersten Busleitung (2) und eine zweite Kabelverbindung des Transceivers (4) an der zweiten Busleitung (2') angeschlossen ist, **dadurch gekennzeichnet,**
- **dass** auf einer busabgewandten Seite des Transceivers (4) sich eine Zwischenbrückeneinheit (5) anschließt, die ein erstes Baumodul (6) und ein zweites Baumodul (7) umfasst, wobei das erste Baumodul (6) ein einen Sender (10) und einen Empfänger (11) aufweisendes erstes Sende-/Empfänger-Paar (8) und das zweite Baumodul (7) ein einen Sender (10) und einen Empfänger (11) aufweisendes zweites Sende-/Empfänger-Paar (9) aufweist, wobei das erste Sende-/Empfänger-Paar (8) über eine Funkschnittstelle mit dem zweiten Sende-/Empfänger-Paar (9) unter Nutzung von zwei Freiraummoden gekoppelt ist,
- **dass** der jeweilige Sender (10) einen Senderoszillator, eine Amplitudenund/oder Phasen- und/oder Frequenzmodulator sowie eine DualMode-Antenne aufweist und wobei der jeweilige Empfänger (11) einen Mischer aufweisenden Demodulator sowie eine Dual-Mode-Antenne aufweist,
- **dass** das zweite Sende-/Empfänger-Paar (9) den gleichen Aufbau aufweist wie das erste Sende-/Empfänger-Paar (8),
- **dass** das zweite Sende-/Empfänger-Paar (9) über Leitungen mit einem Busteilnehmer (12) oder einem Gateway-Modul (15) verbunden ist, wobei der Busteilnehmer (12) einen Mikrokontroller und einen Datenbus-Controller (14) und wobei das Gateway-Modul (15) einen Transceiver (16) und einen Repeater (17) aufweist.

2. Bussystem nach Anspruch 1, **dadurch gekennzeichnet, dass** die Zwischenbrückeneinheit (5) nicht protokollbasiert ausgebildet ist.

3. Bussystem nach Anspruch 1 oder 2, **dadurch gekennzeichnet, dass** die Funkübertragung zwischen dem ersten Sende-/Empfänger-Paar (8) und dem zweiten Sende-/Empfänger-Paar (9) in einem Frequenzbereich Im UWB-Band bis 10 GHz erfolgt.

4. Bussystem nach einem der Ansprüche 1 bis 3, **dadurch gekennzeichnet, dass** der Sender (10) nur einen einzigen Sendeoszillator aufweist.

5. Verfahren umfassend: Übertragen von Daten von den Busleitungen (2, 2') zu dem Teilnehmer (12) oder zu dem Gateway-Modul (15) in einem Bussystem (1) nach einem der Ansprüche 1 bis 4, oder Übertragen von Daten von dem Teilnehmer (12) oder von dem Gateway-Modul (15) zu den Busleitungen (2, 2') in einem Bussystem (1) nach einem der Ansprüche 1 bis 4.

## Claims

1. A bus system containing bus lines (2, 2') at which a number of bus users (12) or gateway modules (15) are connectable via a transceiver (4), wherein the transceiver (4) is connected at a bus node (3) by a cable, wherein, on a side of the transceiver (4) facing the bus, a first connection line of the transceiver (4) is connected at the first bus line (2) and a second cable connection of the transceiver (4) is connected at the second bus line (2'), **characterized**
- **in that**, on a side of the transceiver (4) facing away from the bus, an intermediate bridge unit (5) connects which comprises a first building module (6) and a second building module (7), wherein the first building module (6) has a first transmitter/receiver pair (8) having a transmitter (10) and a receiver (11) and the second building module (7) has a second transmitter/receiver pair (9) having a transmitter (10) and a receiver (11), wherein the first transmitter/receiver pair (8) is coupled to the second transmitter/receiver pair (9) via a radio interface using two gap modules,
- **in that** the respective transmitter (10) has a transmitter oscillator, an amplitude and/or phase and/or frequency modulator, and a dual mode antenna and wherein the respective receiver (11) has a demodulator having a mixer and a dual mode antenna,
- **in that** the second transmitter/receiver pair (9) has the same structure as the first transmitter/receiver pair (8), and
- **in that** the second transmitter/receiver pair (9) is connected to a bus user (12) or a gateway module (15) via lines, wherein the bus user (12) has a micro controller and a data bus controller (14) and wherein the gateway module (15) has a transceiver (16) and a repeater (17).

2. The bus system according to Claim 1, **characterized in that** the intermediate bridge unit (5) is not formed to be protocol based.

3. The bus system according to Claim 1 or 2, **characterized in that** the radio transmission between the first transmitter/receiver pair (8) and the second transceiver/receiver pair (9) takes place in a frequency range in a UWB up to 10 GHz.

4. The bus system according to any one of Claims 1 to 3, **characterized in that** the transmitter (10) has only a single transmitter oscillator.

5. A method, comprising: transmitting data from the bus lines (2, 2') to the users (12) or to the gateway module (15) in a bus system (1) according to any one of Claims 1 to 4, or transmitting data from the user (12) or from the gateway module (15) to the bus lines (2, 2') in a bus system (1) according to any one of Claims 1 to 4.

## Revendications

1. Système de bus, comprenant des lignes de bus (2, 2'), auxquelles peut être raccordée une pluralité d'abonnés de bus (12) ou de modules de passerelle (15) au moyen d'un émetteur-récepteur (4), ledit émetteur-récepteur (4) étant raccordé par câble à un nœud de bus (3), une première ligne de connexion de l'émetteur-récepteur (4) étant raccordée à la première ligne de bus (2) et un deuxième câble de liaison de l'émetteur-récepteur (4) étant raccordé à la deuxième ligne de bus (2') sur un côté de l'émetteur-récepteur (4) proche du bus, **caractérisé**
- **en ce qu'**une unité de pontage intermédiaire (5) est raccordée sur un côté de l'émetteur-récepteur (4) distant du bus, laquelle comprend un premier module structurel (6) et un deuxième module structurel (7), le premier module structurel (6) comportant une première paire d'émetteur-récepteur (8) comprenant un émetteur (10) et un récepteur (11), et le deuxième module structurel (7) comportant une deuxième paire d'émetteur-récepteur (9) comprenant un émetteur (10) et un récepteur (11), la première paire d'émetteur-récepteur (8) étant couplée à la deuxième paire d'émetteur-récepteur (9) par une interface radio au moyen de deux modes aériens,
- **en ce que** chaque émetteur (10) présente un oscillateur d'émission, un modulateur d'amplitude et/ou de phase et/ou de fréquence ainsi qu'une antenne bi-mode, et chaque récepteur (11) présentant un démodulateur pourvu d'un mélangeur ainsi qu'une antenne bi-mode,
- **en ce que** la deuxième paire d'émetteur-récepteur (9) présente la même structure que la première paire d'émetteur-récepteur (8),
- **en ce que** la deuxième paire d'émetteur-récepteur (9) est reliée par des lignes à un abonné de bus (12) ou à un module de passerelle (15), ledit abonné de bus (12) comprenant un microcontrôleur et un contrôleur de bus de données (14), et le module de passerelle (15) comprenant un émetteur-récepteur (16) et un répéteur (17).

2. Système de bus selon la revendication 1, **caractérisé en ce que** l'unité de pontage intermédiaire (5) n'est pas réalisée sur la base de protocoles.

3. Système de bus selon la revendication 1 ou la revendication 2, **caractérisé en ce que** la transmission radio entre la première paire d'émetteur-récepteur (8) et la deuxième paire d'émetteur-récepteur (9) est effectuée dans une plage de fréquence dans la bande ultra-large jusqu'à 10 GHz.

4. Système de bus selon l'une des revendications 1 à 3, **caractérisé en ce que** l'émetteur (10) ne comporte qu'une seul oscillateur d'émission.

5. Procédé, comprenant : la transmission de données des lignes de bus (2, 2') à l'abonné (12) ou au module de passerelle (15) dans un système de bus (1) selon l'une des revendications 1 à 4, ou la transmission de données de l'abonné (12) ou du module de passerelle (15) aux lignes de bus (2, 2') dans un système de bus (1) selon l'une des revendications 1 à 4.
